# EUROPÄISCHE PATENTSCHRIFT

(11) **EP 1 546 489 B1**
(45) Veröffentlichungstag und Bekanntmachung des Hinweises auf die Patenterteilung: **22.07.2015**
(21) Anmeldenummer: 03755557.0
(22) Anmeldetag: 17.09.2003
(51) Int. Cl.: E04G 21/04, B60P 3/16

(54) **FAHRBARE BETONPUMPE SOWIE AUFBAURAHMEN HIERFÜR**
MOBILE CONCRETE PUMP AND CORRESPONDING BUILDING FRAME
POMPE A BETON MOBILE ET BATI DE CONSTRUCTION CORRESPONDANT

(30) Priorität: 04.10.2002 DE 10246447
(43) Veröffentlichungstag der Anmeldung: 29.06.2005
(73) Patentinhaber: Putzmeister Engineering GmbH, 72631 Aichtal (DE)
(72) Erfinder: LEIBBRAND, Joachim, 75331 Engelsbrand (DE); SCHNEIDER, Dieter, 70794 Filderstadt (DE); HURR, Hellmut, 72760 Reutlingen (DE)
(74) Vertreter: Wolf, Eckhard
(86) Internationale Anmeldenummer: PCT/EP2003/010314
(87) Internationale Veröffentlichungsnummer: WO 2004/033822

(56) Entgegenhaltungen:
- DE-A- 3 122 725
- PATENT ABSTRACTS OF JAPAN Bd. 1998, Nr. 11, 30. September 1998 (1998-09-30) -& JP 10 176418 A (ISHIKAWAJIMA CONSTR MACH CO), 30. Juni 1998 (1998-06-30)

## Beschreibung

Die Erfindung betrifft eine fahrbare Betonpumpe mit einem auf ein Fährgestell eines LKW-Chassis aufsetzbaren und mit diesem im Bereich zweier unter Freilassung eines Freiraums in seitlichem Abstand voneinander angeordneten Längsseitenholmen verbindbaren Aufbaurahmen zur Aufnahme von eine Abstützvorrichtung, eine starr mit Materialaufgabebehälter verbundene Kernpumpe und einen Verteilermast bildenden Funktionseinheiten, sowie einer Antriebsbaugruppe zur Ansteuerung der Funktionseinheiten, wobei die Antriebsbaugruppe und die Kernpumpe im Bereich des Freiraums zwischen den Längsseitenholmen angeordnet sind und der Aufbaurahmen eine an seinem rückwärtigen Ende angeordnete Festlagerstelle für die Kernpumpe aufweist.

Bei fahrbaren Betonpumpen dieser Art wird der vormontierte Aufbaurahmen auf das Fahrgestell eines LKW-Chassis aufgesetzt und mit diesem verbunden (DE-31 22 725 A1). Die Antriebsbaugruppe zur Ansteuerung der Funktionseinheiten wird beim Pumpbetrieb über einen Nebenabtrieb oder ein Verteilergetriebe mit dem LKW-Motor gekuppelt. Je nach Pumpenmodell umfasst die Antriebsbaugruppe eine oder mehrere Hydraulikpumpen sowie weitere Hilfspumpen, beispielsweise für den Antrieb des Rührwerks im Materialaufgabebehälter der Kernpumpe.

Als Kernpumpe wird üblicherweise eine Zweizylinder-Kolbenpumpe verwendet, die zwei paarweise miteinander verbundene hydraulische Antriebszylinder und Förderzylinder aufweist, deren Kolben paarweise über eine gemeinsame, durch einen Wasserkasten hindurchgreifende Kolbenstange starr miteinander verbunden und über eine Hydrauliksteuerung im Gegentakt antreibbar sind. Der Beton wird über einen Materialaufgabebehälter zugeführt, in welchem sich ein Rührwerk und eine Rohrweiche befindet. Die Rohrweiche wird eingangsseitig abwechselnd vor die Ausgänge der beiden Förderzylinder geschwenkt und mündet ausgangsseitig in eine Förderleitung, die über den Verteilermast geführt ist. Der Verteilermast ist vorzugsweise als Knickmast ausgebildet, der auf einem im vorderen Bereich des Aufbaurahmens angeordneten Mastdrehlagerbock um 360° drehbar gelagert ist und der im zusammengeklappten Fahrzustand auf einem rückwärtigen Mastauflagerbock aufliegt.

Bei bekannten fahrbaren Betonpumpen ist die Kernpumpe so in den Aufbaurahmen eingesetzt, dass sie nur schwer demontierbar ist. Sie wird üblicherweise im Bereich des Wasserkastens am Aufbaurahmen angeschweißt. Um an die Hydraulikaggregate der Antriebsbaugruppe beispielsweise zu Reparaturzwecken heranzukommen, müssen die Kernpumpe und die Antriebsbaugruppe demontiert werden. Um die Antriebsbaugruppe entnehmen zu können, musste bisher die Kernpumpe völlig auseinander gebaut werden. Dies ist sehr arbeitsaufwendig. Außerdem können hierbei wegen der Hydraulikfüllung erhebliche Komplikationen auftreten.

Für unterschiedliche Typen und Größen der Funktionseinheiten sind verschiedene Antriebsbaugruppen erforderlich. Die hieraus resultierenden Konstruktionsvarianten ergeben eine Vielzahl unterschiedlicher Einbausituationen. Dabei ist zu berücksichtigen, dass die Kernpumpe in einem frühen Aufbaustadium in den Aufbaurahmen eingesetzt und im Bereich des Wasserkastens mit diesem verschweißt werden muss. Eine Vorfertigung des Aufbaurahmens ist daher ohne Kenntnis der exakten Konstruktionsvarianten nicht möglich.

Ausgehend hiervon liegt der Erfindung die Aufgabe zugrunde, die fahrbaren Betonpumpen mit Aufbaurahmen der eingangs angegebenen Art dahingehend zu verbessern, dass die Montage der Funktionseinheiten und der Antriebsbaugruppe vereinfacht und eine Vorfertigung des Aufbaurahmens erleichtert wird.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den abhängigen Ansprüchen.

Die erfindungsgemäße Lösung besteht im Wesentlichen darin, dass der Aufbaurahmen eine den Freiraum überbrückende Loslagerstelle und eine an seinem rückwärtigen Ende angeordnete Festlagerstelle zur lösbaren Aufnahme der modulartig vormontierten Kernpumpe und des starr mit ihr verbundenen Materialaufgabebehälters aufweist. Mit diesen Maßnahmen wird erreicht, dass die vormontierte Kernpumpe vom rückwärtigen Ende aus in den Freiraum einführbar und mit den Lagerstellen einfach verbindbar ist. Eine weitere Verbesserung in dieser Hinsicht wird dadurch erreicht, dass der Aufbaurahmen zu den Lagerstellen führende Gleitschienen für die Montage und Demontage der Kernpumpe aufweist.

Die Loslagerstelle ist vorteilhafterweise als den Freiraum überbrückender Querträger ausgebildet, auf welchem die Kernpumpe aufliegt. Um beim Pumpvorgang auftretende Vibrationen dämpfen zu können, weist der Querträger eine aus elastomerem Kunststoff bestehende Lagerfläche auf. Eine weitere Verbesserung in dieser Hinsicht wird erzielt, wenn die Kernpumpe im Bereich der Loslagerstelle seitlich durch elastomere Kunststoffpuffer gegen die Längsseitenholme federnd abgestützt ist. Weiter kann die Kernpumpe gegen Abheben von der Loslagerstelle gesichert werden. Zu diesem Zweck kann die Kernpumpe zur Abhebesicherung beispielsweise mindestens einen mit der Loslagerstelle verbindbaren, vorzugsweise als Fanghaken, Kniehebel, Steckkeil oder Steckbolzen ausgebildeten Fangmechanismus aufweisen. Die zweckmäßig als hydraulisch angetriebene Zweizylinder-Kolbenpumpe ausgebildete Kernpumpe weist einen von einer Kolbenstange durchdrungenden Wasserkasten auf, mit dem sie auf der Loslagerstelle aufliegt.

Um verschieden große Kernpumpen aufnehmen zu können, ist die Loslagerstelle an verschiedenen, in Längsrichtung im Abstand voneinander angeordneten Stellen der Längsseitenholme positionierbar. Der die Loslagerstelle bildende Querträger wird dazu an den Längsseitenholmen starr befestigt, vorzugsweise an diesen angeschraubt oder angeschweißt.

Eine weitere bevorzugte Ausgestaltung der Erfindung sieht vor, dass die hydraulischen und elektrischen Steuer- und Schaltorgane für die Antriebsbaugruppe und für die an diese angeschlossenen Funktionseinheiten zu einem im rückwärtigen Bereich des Aufbaurahmens angeordneten Steuermodul zusammengefasst sind. Das Steuermodul umfasst dabei zweckmäßig die für die Steuerung notwendigen, vorzugsweise in einem hydraulischen Steuerblock zusammengefassten Hydraulikventile und/oder einen Hydrospeicher. Die vom Steuermodul zur Antriebsbaugruppe führenden Hydraulikleitungen sind zweckmäßig auf der Innenfläche der Längsseitenholme des Aufbaurahmens verlegt.

Eine bevorzugte Ausgestaltung der Erfindung sieht vor, dass der Aufbäurahmen Montagemittel zur lösbaren Aufnahme verschieden großer, den Freiraum überbrückender, mit unterschiedlichen Antriebsbaugruppen modulartig bestückter Tragrahmen aufweist. Dies kann beispielsweise dadurch verwirklicht werden, dass der Aufbaurahmen an der dem Freiraum zugewandten Innenfläche der Längsseitenholme je eine sich in deren Längsrichtung erstreckende Montageschiene aufweist, dass an den Längsseitenholmen jeweils mindestens zwei im Abstand voneinander quer in den Freiraum ragende Lagerzapfen zur Aufnahme des Tragrahmens für die Antriebsbaugruppe angeordnet sind und dass die Lagerzapfen je eine Grundplatte tragen, mit der sie lösbar an der Montageschiene befestigbar sind.

Mit diesen Maßnahmen ist eine Vorfertigung des Aufbaurahmens auch ohne Kenntnis der später zu verwendenden Antriebsbaugruppe möglich. Dies wird vor allem dadurch erreicht, dass die Montageschienen mehrere in Längsrichtung in definiertem Rasterabstand voneinander angeordnete, quer zum Freiraum hin offene Schraubbohrungen aufweisen und dass die Grundplatten mindestens zwei im Rasterabstand der Schraubbohrungen voneinander angeordnete Durchtrittsöffnungen für Befestigungsschrauben aufweisen. Der Rasterabstand zwischen den Schraubbohrungen kann so gewählt werden, dass für alle in der Praxis vorkommende Tragrahmen eine Gruppe von Rasterpositionen vorgesehen ist, an denen die Lagerzapfen nachträglich befestigt werden können.

Eine weitere bevorzugte Ausgestaltung der Erfindung sieht vor, dass die Montageschienen ein Rechteckprofil aufweisen, und dass die Grundplatten auf ihrer den Lagerzapfen abgewandten Breitseite eine zu dem Rechteckprofil der Montageschienen komplementäre randoffene Profilausnehmung aufweisen, mit der sie formschlüssig auf die Montageschienen aufsetzbar und mit den Befestigungsschrauben fixierbar sind.

Um die Lagerzapfen in verschiedenen Höhen bezüglich der Montageschienen positionieren zu können, wird gemäß einer weiteren vorteilhaften Ausgestaltung der Erfindung vorgeschlagen, dass der Lagerzapfen bezüglich der Profilausnehmung außermittig und vorzugsweise in Längsrichtung mittig an der Grundplatte angeordnet ist. Andererseits sind die Durchtrittsöffnungen bezüglich der Profilausnehmung zweckmäßig mittig und in Längsrichtung im Abstand vom Lagerzapfen außermittig an der Grundplatte angeordnet.

Die Lagerzapfen können dabei an der Grundplatte angeschweißt sein. Eine besonders stabile und zudem platzsparende Verbindung wird erzielt, wenn der Lagerzapfen einen Flansch mit einem rückwärtigen Steckzapfen aufweist und mit dem Steckzapfen bis zum Anschlag des Flansches in eine Bohrung der Grundplatte eingesteckt und mit dieser verschweißt ist. Auf jeden Lagerzapfen ist ein Lagerauge aufsteckbar, das zweckmäßig am Tragrahmen lösbar befestigbar, vorzugsweise anschraubbar ist. Um die beim Pumpbetrieb auftretenden Vibrationen zu dämpfen, ist das Lagerauge zum Lagerzapfen hin mit einem vorzugsweise elastisch verformbaren Kunststoffmaterial ausgefüttert.

Im folgenden wird die Erfindung anhand eines in der Zeichnung in schematischer Weise dargestellten Ausführungsbeispiels näher erläutert. Es zeigen
- Fig. 1: eine Seitenansicht einer fahrbaren Betonpumpe;
- Fig. 2: eine Draufsicht auf die fahrbare Betonpumpe nach Fig. 1 bei abgenommenen Verteilermast in teilweise geschnittener Darstellung;
- Fig. 3a und b: einen Schnitt durch die Längsseitenholme (links und rechts verschieden) zweier Aufbaurahmen mit verschiedenen Tragrahmen;
- Fig. 4a und b: eine Breitseitenansicht eines der Längsseitenholme der Aufbaurahmen gemäß Fig. 3a und b (rechts) mit verschiedenen Zapfenanordnungen;
- Fig. 5a: einen Schnitt durch einen Längsseitenholm des Tragrahmens nach Fig. 3b (links) in vergrößerter Darstellung;
- Fig. 5b: einen Schnitt durch einen Längsseitenholm des Tragrahmens nach Fig. 3a (rechts) in vergrößerter Darstellung;
- Fig. 6a: eine Seitenansicht eines Lagerzapfens mit Grundplatte;
- Fig. 6b: einen Schnitt entlang der Schnittlinie B-B der Fig. 6a;

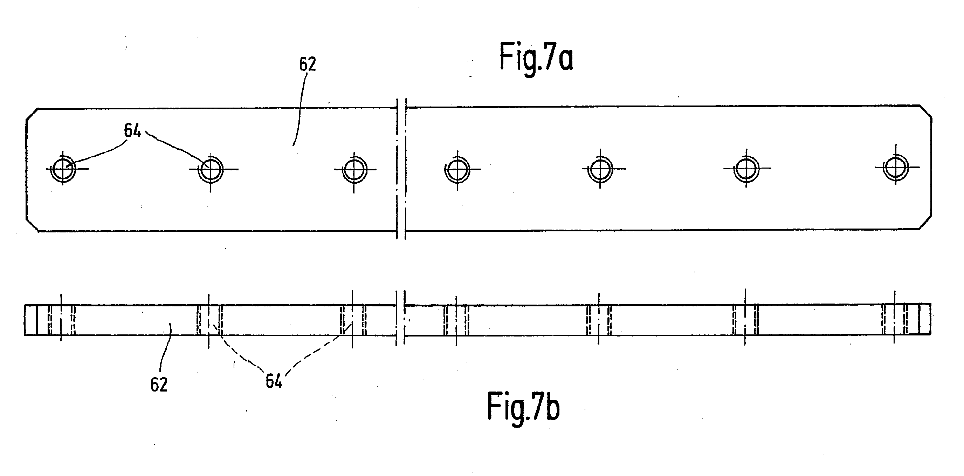

- Fig. 7a und b: eine Breitseitenansicht und eine Schmalseitenansicht einer Montageleiste;
- Fig. 8a bis c: eine Seitenansicht, eine Stirnseitenansicht und eine Draufsicht eines Tragrahmens für die Antriebsbaugruppe;
- Fig. 9a bis d: einen Ausschnitt aus Fig. 1 im Bereich der Loslagerstelle mit verschiedenen Abhebesicherungen;
- Fig. 10a bis h: einen Ausschnitt aus Fig. 1 im Bereich der Festlagerstelle mit verschiedenen Kupplungsvorrichtungen.

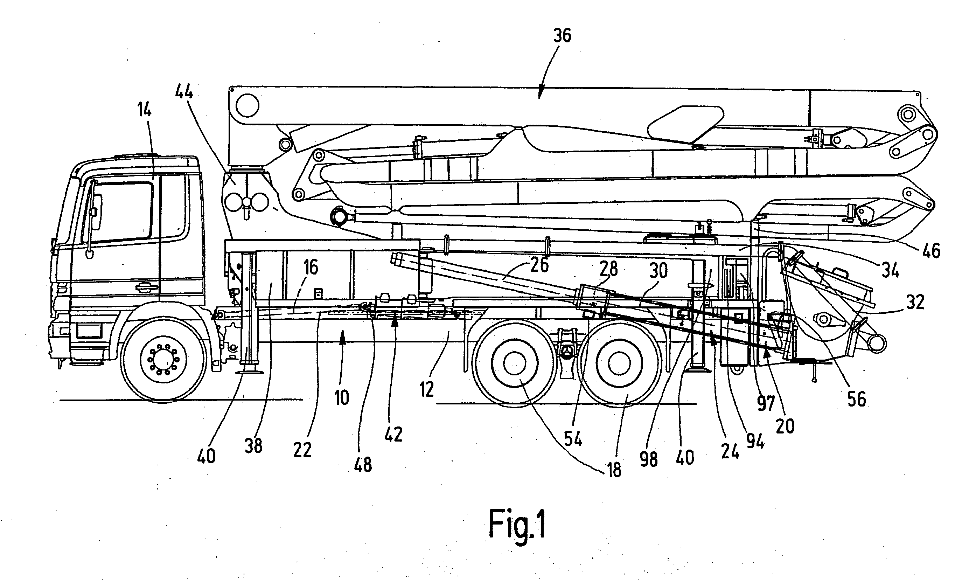

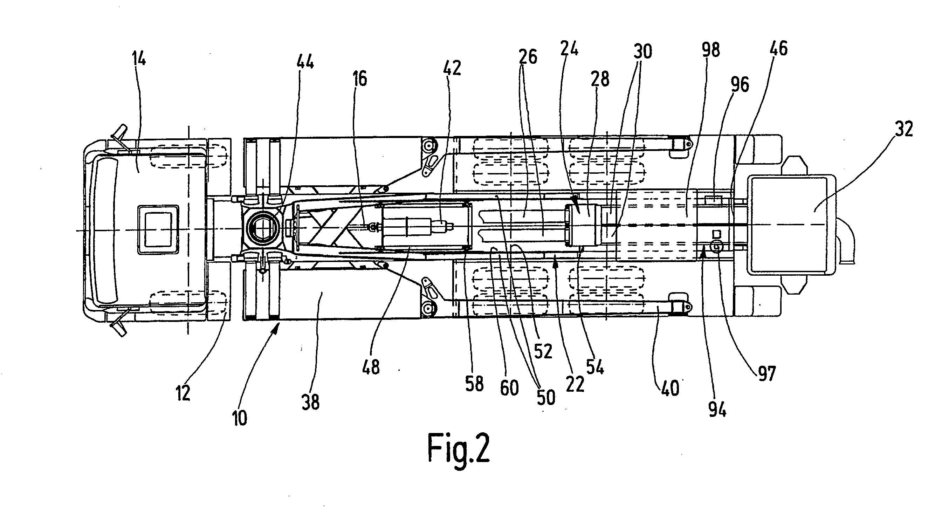

Die in Fig. 1 und 2 dargestellte fahrbare Betonpumpe weist ein LKW-Chassis 10, mit einem motorgetriebenen Fahrgestell 12 und einem Führerhaus 14 auf, dessen Motorantrieb über einen Antriebsstrang 16 mit den Hinterachsen 18 kuppelbar ist. Das Chassis 10 trägt eine Betonpumpe 20, die über einen Aufbaurahmen 22 mit dem Fahrgestell 12 verbunden ist. Der Betonpumpenaufbau umfasst im wesentlichen eine Kernpumpe 24 mit zwei hydraulischen Antriebszylindern 26, zwei paarweise mit den Antriebszylindern 26 über einen Wasserkasten 28 verbundene Förderzylinder 30 und einen am anderen Ende der Förderzylinder 30 starr angeordneten Materialaufgabebehälter 32. Weiter umfasst der Aufbau eine Druckförderleitung 34, die über einen als Knickmast ausgebildeten Verteilermast 36 geführt ist und am Ende des letzten Mastarms einen den geförderten Beton zur Betonierstelle ausgebenden Endschlauch aufweist. Der Verteilermast 36 ist auf einem in der Nähe des stirnseitigen Endes mit dem Aufbaurahmen 22 starr verbundenen Mastdrehlagerbock 44 um eine vertikale Achse drehbar gelagert. Am rückwärtigen Ende des Aufbaurahmens 22 ist ein Mastauflagerbock 46 angeordnet, auf welchem der Verteilermast 36 im eingeklappten Fahrzustand aufliegt. Weiter ist eine Abstützvorrichtung 38 mit ausstellbaren Stützbeinen 40 vorgesehen. Beim Betonierbetrieb werden die Stützbeine ausgestellt und unter Anhebung des Fahrgestells 12 auf dem Erdboden abgestützt. Der hydraulische Antrieb der Kernpumpe 24, des Verteilermasts 36 und der Stützbeine 40 erfolgt über eine Antriebsbaugruppe 42, bestehend aus Hydraulikpumpen 43, die über den vom Fahrzeugmotor kommenden Antriebsstrang 16 antreibbar sind.

Die Antriebsbaugruppe 42 ist auf einen Tragrahmen 48 montiert, der in der Praxis auch als "Antriebsschemel" bezeichnet wird. Je nach Pumpentyp, Pumpenleistung, Art und Größe der Abstützvorrichtung werden unterschiedliche Antriebsbaugruppen 42 und damit auch unterschiedliche Tragrahmen 48 benötigt.

Der Aufbaurahmen 22 weist zwei Längsseitenholme 50 auf, die unter Bildung eines Freiraums 52 in seitlichem Abstand voneinander auf dem Fahrgestell 12 fixiert werden. Der Freiraum 52 ist so dimensioniert, dass die Kernpumpe 24 schräg durch ihn hindurchgreift. Die Kernpumpe liegt im Bereich des Wasserkastens 28 auf einem den Freiraum 52 überbrückenden, mit seinen Enden an den Längsseitenholmen 50 angeschweißten oder angeschraubten Querträger 54 auf, der an seiner Oberseite eine glatte Kunststoffbeschichtung 55 trägt. Der Querträger 54 fungiert als Loslager für die Kernpumpe, die außerdem am rückwärtigen Ende des Aufbaurahmens 22 an einem rahmenfesten Festlager 56 fixiert ist.

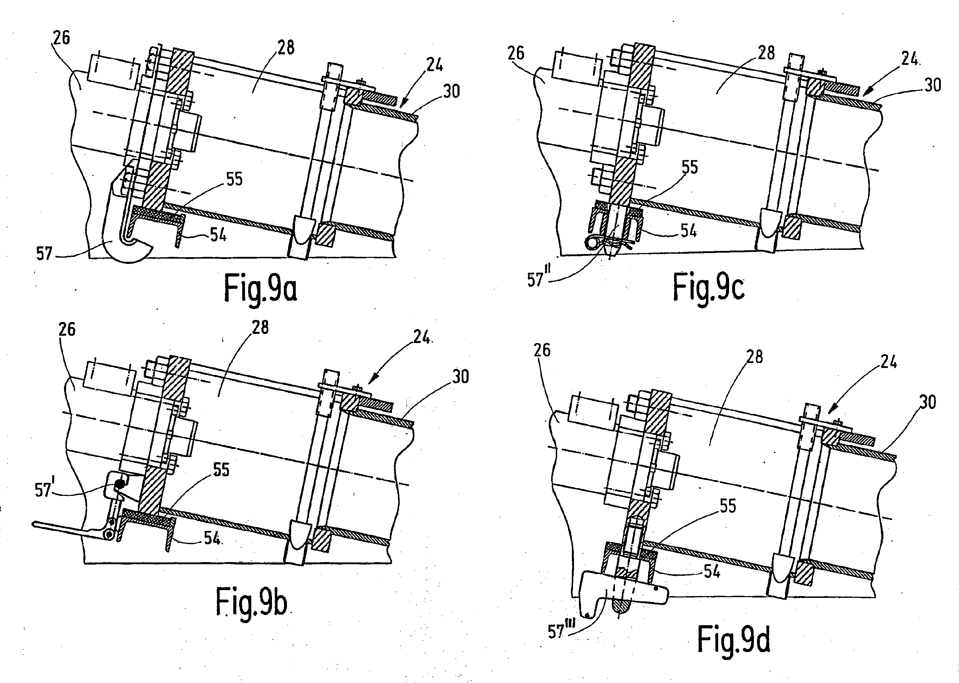

Im Bereich des Loslagers ist die Kernpumpe mit Hilfe eines Fangmechanismus 57,57',57",57"' gegen Abheben vom Querträger 54 gesichert. In den Fig. 9a bis d sind verschiedene Ausführungsformen derartiger Fangmechanismen dargestellt: Fanghaken 57, Kniehebel 57', Durchsteckbolzen mit Federsicherung 57" und Durchsteckbolzen mit Keilsicherung 57"'.

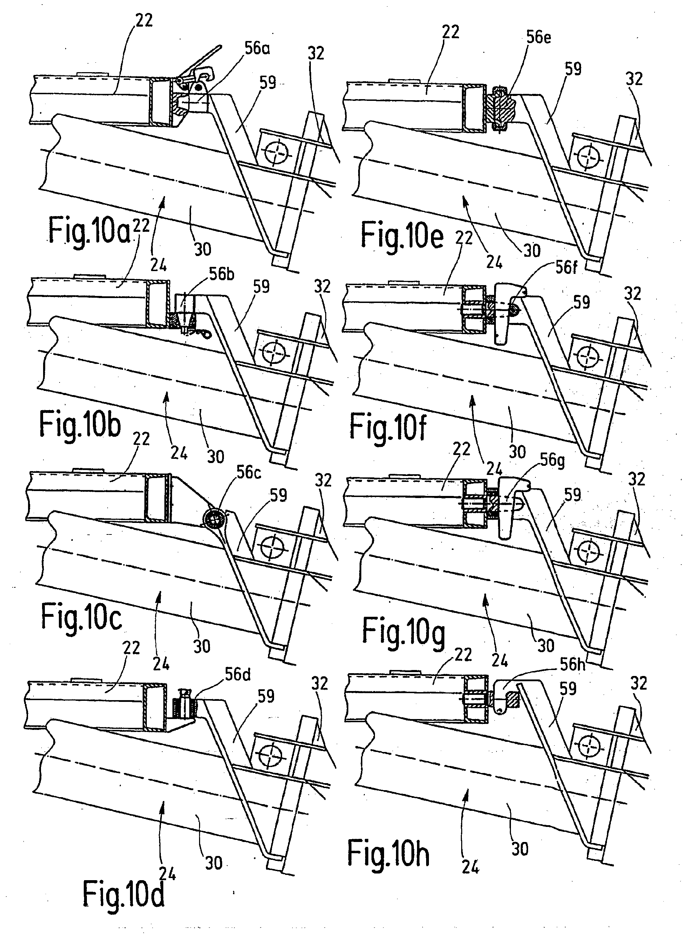

Die Festlagerstelle 56 befindet sich an zwei im Abstand voneinander angeordneten, starren Auslegern 59 des Materialaufgabebehälters 32. An den Festlagerstellen befinden sich lösbare Kupplungen, von denen in Fig. 10a bis h verschiedene Ausführungsformen 56a bis h dargestellt sind:
- 56a:: ein horizontaler Zentrierkegel, der durch einen Feststellhebel gesichert ist;
- 56b: ein vertikaler Zentrierkegel, der durch einen Federstecker oder einen nicht dargestellten Stift gesichert ist;
- 56c: ein horizontaler Bolzen, der durch ein Gummi-Metall-Element gedämpft ist;
- 56d: ein vertikaler Bolzen, der durch ein Gummi-Metall-Element gedämpft ist;
- 56e: eine Schalenkupplung;
- 56f: eine Keilkupplung ohne Dämpfungsglied;
- 56g: eine Keilkupplung mit Dämpfungsglied;
- 56h: eine Hakenkupplung.

Sowohl die in Fig. 9a bis d gezeigten Fangmechanismen im Bereich des Loslagers als auch die in Fig. 10a bis h gezeigten Kupplungsmechanismen im Bereich des Festlagers 56 haben den Vorteil, dass sie sich leicht fixieren oder lösen lassen.

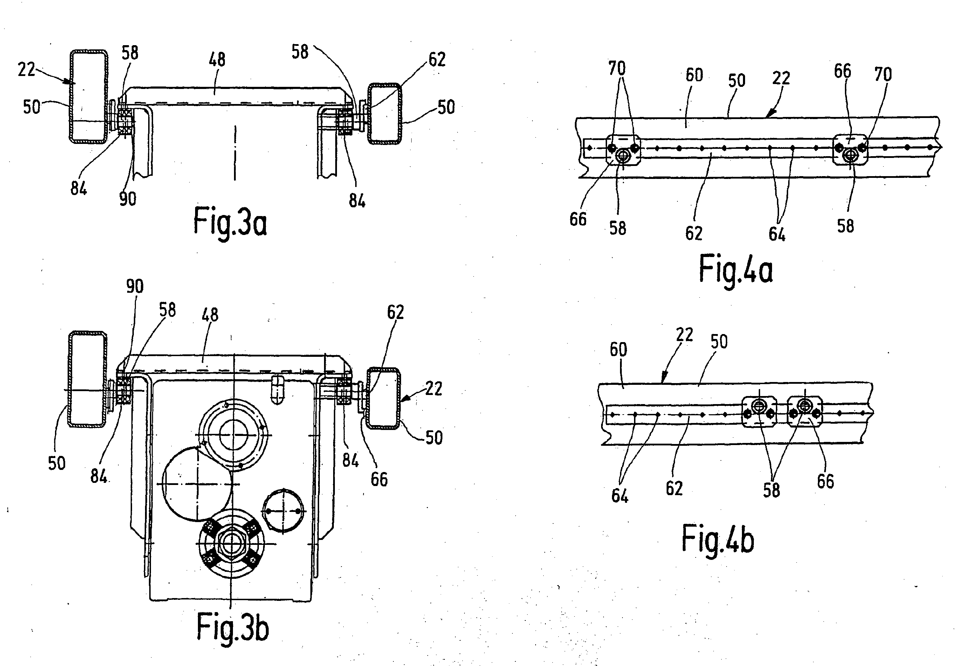

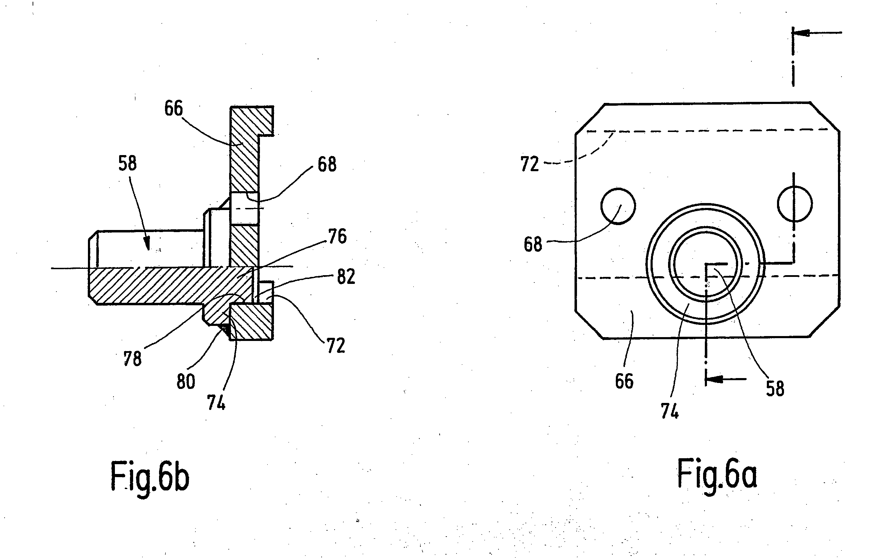

Der Tragrahmen 48 befindet sich unterhalb des bodenseitigen Endes der hydraulischen Antriebszylinder 26 der Kernpumpe 24. Er ist dort innerhalb des Freiraums 52 an mindestens vier Lagerzapfen 58 aufgehängt, die an den dem Freiraum 52 zugewandten Innenflächen 60 der Längsseitenholme 50 befestigt sind und in Richtung Freiraum 52 weisen. Um verschieden große Tragrahmen 48 an ein und demselben Aufbaurahmen 22 anbringen zu können, tragen die Längsseitenholme 50 an ihren Innenflächen 60 jeweils eine Montageschiene 62, die ein rechteckiges Profil aufweisen und die in definierten Rasterabständen in Längsrichtung hintereinander angeordnete, zum Freiraum 52 hin offene Schraubbohrungen 64 aufweisen. Die Lagerzapfen 58 tragen ihrerseits je eine Grundplatte 66, die zwei im Rasterabstand der Schraubbohrungen 64 voneinander angeordnete Durchtrittsöffnungen 68 für Befestigungsschrauben 70 aufweisen, mit denen sie an definierten Stellen der Montageschienen 62 befestigbar sind. Auf ihrer dem Lagerzapfen 58 abgewandten Breitseite weisen die Grundplatten 66 eine dem Rechteckprofil der Montageschienen 62 komplementäre randoffene Profilausnehmung 72 auf, mit der sie formschlüssig auf die Montageschienen 62 aufsetzbar und mit den Befestigungsschrauben 70 in den Schraubbohrungen 64 fixierbar sind. Wie insbesondere aus Fig. 6a und b zu ersehen ist, ist der Lagerzapfen 58 bezüglich der Profilausnehmung 72 außermittig und in Längsrichtung mittig an der Grundplatte 66 angeordnet. Andererseits sind die Durchtrittsöffnungen 68 bezüglich der Profilausnehmungen mittig und in Längsrichtung im Abstand vom Lagerzapfen außermittig an der Grundplatte 66 angeordnet. Mit diesen Maßnahmen wird erreicht, dass die Grundplatten 66 mit nach oben (Fig. 3b, 4b, 5a) oder unten (Fig. 3a, 4a, 5b) versetzt angeordneten Lagerzapfen an der Montageschiene befestigbar sind.

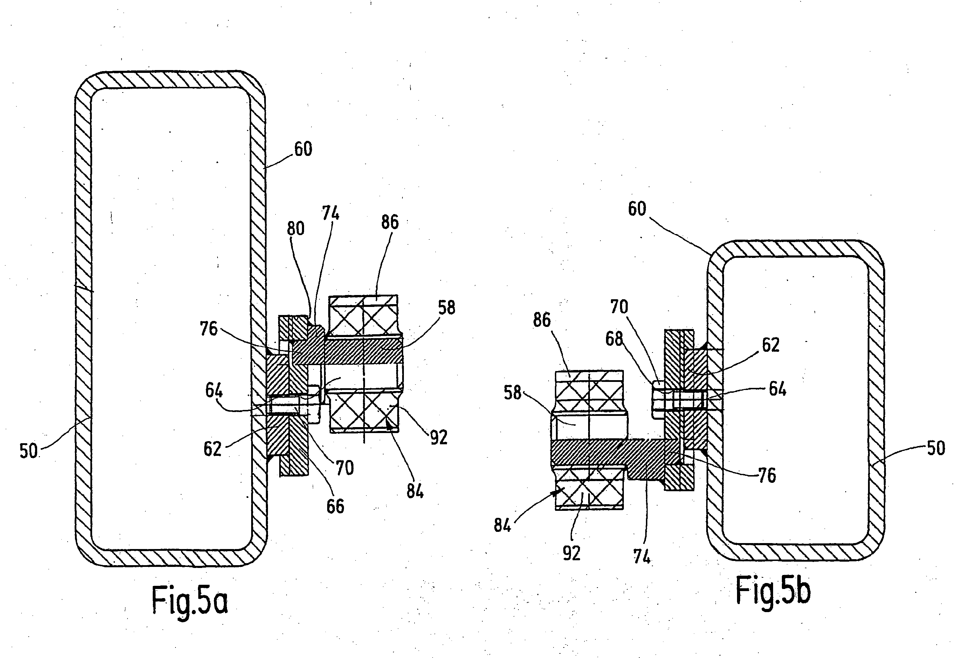

Wie aus Fig. 5a,b, 6b zu ersehen ist, sind die Lagerzapfen 58 an ihrer Grundplatte 66 angeschweißt. Die Lagerzapfen weisen zu diesem Zweck einen Flansch 74 und einen rückwärtigen Steckzapfen 76 auf. Sie sind mit ihrem Steckzapfen 76 bis zum Anschlag des Flanschs 74 in eine Bohrung 78 der Grundplatte eingesteckt und dort über verschiedene Schweißnähte 80,82 mit der Grundplatte verschweißt.

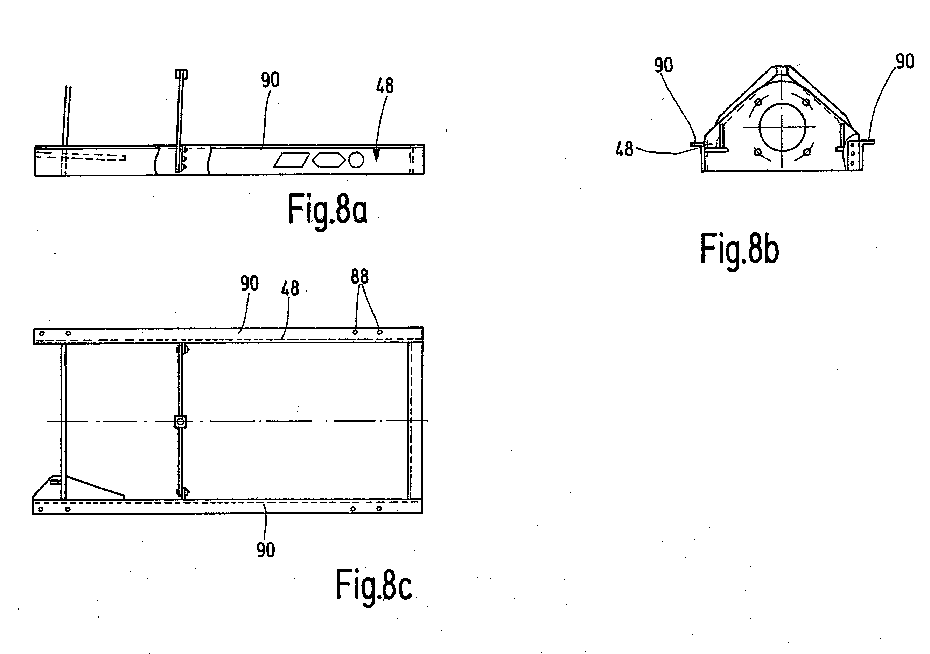

Auf jeden Lagerzapfen 58 ist ein Lagerauge 84 aufsteckbar, das seinerseits an einem Halter 86 angeordnet ist, mit dem es an einer hierfür vorgesehenen Schraubposition 88 (Fig. 8c) an einem der Tragflansche 90 des Tragrahmens 48 befestigbar ist. Je nach Breite des Tragrahmens 48 können Lagerzapfen 58 mit unterschiedlich dickem Flansch 74 verwendet werden (vgl. Fig. 5a und b). Zur Dämpfung der beim Pumpvorgang auftretenden Vibrationen sind die Lageraugen 84 zum Lagerzapfen 58 hin mit einem elastomeren Material 92 ausgefüttert. Wie aus den Fig. 3a,b sowie 4a,b zu ersehen ist, können an den Montageschienen 62 des Aufbaurahmens 22 mit einfachen Mitteln unterschiedliche Tragrahmen, die verschiedene Positionen und Orientierungen der Lagerzapfen 58 erfordern, montiert werden.

Die hydraulischen und elektrischen Steuer- und Schaltorgane für die Antriebsbaugruppe 42 und die an diese angeschlossenen Funktionseinheiten, wie Kernpumpe 24, Abstützvorrichtung 38 und Verteilermast 36 sind zu einem im rückwärtigen Bereich des Aufbaurahmens 22 angeordneten Steuermodul 94 zusammengefasst. Der Steuermodul 94 umfasst u.a. die für die Steuerung notwendigen, vorzugsweise in einem hydraulischen Steuerblock 96 zusammengefassten Hydraulikventile und/oder einen Hydrospeicher 97. Die vom Steuermodul 94 zur Antriebsbaugruppe 42 führenden Hydraulik- und Elektroleitungen sind auf der Innenseite der Längsseitenholme 50 des Aufbaurahmens 22 verlegt und können bei der Montage und Demontage einfach über Steckverbindungen gekoppelt oder abgekoppelt werden. Weiter findet sich im rückwärtigen Teil des Aufbaurahmens 22 vor dem Steuermodul 94 ein großer Wassertank 98 mit integrierter Wasserpumpe. Das Wasser wird für die Endreinigung der Betonpumpe nach dem Pumpbetrieb benötigt.

Zusammenfassend ist folgendes festzuhalten: Die Erfindung bezieht sich auf eine fahrbare Betonpumpe, die einen auf ein Fahrgestell 12 eines LKW-Chassis 10 aufsetzbaren Aufbaurahmen 22 zur Aufnahme von eine Abstützvorrichtung 38, eine Kernpumpe 24 und einen Verteilermast 36 bildenden Funktionseinheiten aufweist. Der Aufbaurahmen 22 weist zwei unter Freilassung eines Freiraums 52 im Abstand voneinander angeordnete Längsseitenholme 50 auf, mit denen er auf dem Fahrgestell 12 aufliegt. Weiter ist eine Antriebsbaugruppe 42 zur Ansteuerung der Funktionseinheiten vorgesehen, die zusammen mit der Kernpumpe 24 im Bereich des Freiraums 52 zwischen den Längsseitenholmen 50 angeordnet sind. Um eine einfache Montage und Demontage des Aufbaurahmens 22 zu ermöglichen, wird gemäß der Erfindung vorgeschlagen, dass der Aufbaurahmen 22 eine den Freiraum überbrückende Loslagerstelle 54 und eine an seinem rückwärtigen Ende angeordnet Festlagerstelle 56 zur lösbaren Aufnahme der modulartig vormontierten Kernpumpe aufweist. Weiter sind an dem Aufbaurahmen Montagemittel 62 zur lösbaren Aufnahme verschieden großer, den Freiraum 52 überbrückender, mit unterschiedlichen Antriebsbaugruppen 42 modulartig bestückbarer Tragrahmen 48 vorgesehen.

## Patentansprüche

1. Fahrbare Betonpumpe mit einer Kernpumpe und einem auf ein Fahrgestell (12) eines LKW-Chassis (10) aufsetzbaren und mit diesem im Bereich zweier unter Freilassung eines Freiraums (52) in seitlichem Abstand voneinander angeomdeter Längsseitenholme (50) verbindbaren Aufbaurahmen (22) zur Aufnahme von eine Abstützvorrichtung (38), die starr mit einem Materialaufgabebehälter (32) verbundene Kernpumpe (24) und einen Verteilermast (36) bildenden Funktionseinheiten sowie einer Antriebsbaugruppe (42) zur Ansteuerung der Funktionseinheiten, wobei die Antriebsbaugruppe (42) und die Kernpumpe (24) im Bereich des Freiraums (52) zwischen den Längsseitenholmen (50) angeordnet sind und der Aufbaurahmen (22) eine an seinem rückwärtigen Ende angeordnete Festlagerstelle (56) für die Kernpumpe (24) aufweist, **dadurch gekennzeichnet, dass** der Aufbaurahmen (22) eine den Freiraum überbrückende Loslagerstelle (54) für die Kernpumpe (24) aufweist und dass die modulartig vormontierte Kernpumpe (24) und der starr mit ihr verbundene Materialaufgabebehälter (32) vom rückwärtigen Ende des Aufbaurahmens (22) aus in den Freiraum (52) eingeführt und mit der Loslagerstelle (54) und der Festlagerstelle (56) lösbar verbunden ist.

2. Betonpumpe nach Anspruch 1, **dadurch gekennzeichnet, dass** der Aufbaurahmen (22) zu den Lagerstellen führende Gleitschienen für die Montage und Demontage der Kernpumpe (24) aufweist.

3. Betonpumpe nach Anspruch 1 oder 2, **dadurch gekennzeichnet, dass** die Loslagerstelle (54) als den Freiraum (52) überbrückender Querträger ausgebildet ist, auf welchem die Kernpumpe (24) aufliegt.

4. Betonpumpe nach einem der Ansprüche 1 bis 3, **dadurch gekennzeichnet, dass** die Kernpumpe (24) im Bereich der Loslagerstelle (54) seitlich, vorzugsweise durch gummielastische Puffer, gegen die Längsseitenholme (50) federnd abgestützt ist.

5. Betonpumpe nach einem der Ansprüche 1 bis 4, **dadurch gekennzeichnet, dass** die Kernpumpe (24) auf der Loslagerstelle (54) aufliegt und gegen Abheben von dieser gesichert ist.

6. Betonpumpe nach einem der Ansprüche 1 bis 5, **dadurch gekennzeichnet, dass** die Kernpumpe (24) zur Abhebesicherung mindestens einen mit der Loslagerstelle (54) verbindbaren, vorzugsweise als Fanghaken (56), Kniehebel (56'), Steckbolzen (56") oder Steckkeil (56"') ausgebildeten Fangmechanismus aufweist.

7. Betonpumpe nach einem der Ansprüche 1 bis 6, **dadurch gekennzeichnet, dass** die Kernpumpe als hydraulisch angetriebene Kolbenpumpe ausgebildet ist und dass sie mit ihrem Wasserkasten (28) auf der Loslagerstelle (54) aufliegt.

8. Betonpumpe nach einem der Ansprüche 1 bis 7, **dadurch gekennzeichnet, dass** die Loslagerstelle (54), an verschiedenen, in Längsrichtung im Abstand voneinander angeordneten Stellen an den Längsseitenholmen (50) positionierbar ist.

9. Betonpumpe nach einem der Ansprüche 3 bis 8, **dadurch gekennzeichnet, dass** der die Loslagerstelle (54) bildende Querträger an den Längsseitenholmen (50) starr befestigt, vorzugsweise angeschraubt oder angeschweißt ist.

10. Betonpumpe nach einem der Ansprüche 1 bis 9, **dadurch gekennzeichnet, dass** der Materialaufgabebehälter (32) mindestens einen mit der Festlagerstelle (56) des Aufbaurahmens (22) lösbar und starr verbindbaren Ausleger (59) aufweist.

11. Betonpumpe nach Anspruch 10, **dadurch gekennzeichnet, dass** die Festlagerstelle (56) ein vorzugsweise gummielastisches Dämpfungselement aufweist.

12. Betonpumpe nach einem der Ansprüche 1 bis 11, **dadurch gekennzeichnet, dass** der Aufbaurahmen (22) Montagemittel (62) zur lösbaren Aufnahme verschieden großer, den Freiraum (52) überbrückender, mit unterschiedlichen Antriebsbaugruppen modulartig bestückbarer Tragrahmen (48) aufweist.

13. Betonpumpe nach einem der Ansprüche 1 bis 12, **dadurch gekennzeichnet, dass** die hydraulischen und/oder elektrischen Steuer- und Schaltorgane für die Antriebsbaugruppe und für die an diese angeschlossenen Funktionseinheiten zu einem im rückwärtigen Bereich des Aufbaurahmens (22) angeordneten Steuermodul (94) zusammengefasst sind.

14. Betonpumpe nach Anspruch 13, **dadurch gekennzeichnet, dass** das Steuermodul (94) die für die Steuerung notwendigen, vorzugsweise in einem hydraulischen Steuerblock (96) zusammengefassten Hydraulikventile und/oder einen Hydrospeicher (97) umfasst.

15. Betonpumpe nach Anspruch 13 oder 14, **dadurch gekennzeichnet, dass** die vom Steuermodul (94) zur Antriebsbaugruppe (42) führenden Hydraulikleitungen an den Längsseitenholmen (50) des Aufbaurahmens (22) verlegt sind.

16. Betonpumpe nach einem der Ansprüche 1 bis 15, **dadurch gekennzeichnet, dass** an der dem Freiraum (52) zugewandten Innenfläche (60) der Längsseitenholme (50) je eine sich in deren Längsrichtung erstreckende Montageschiene (62) starr angeordnet ist, dass an den Längsseitenholmen (50) jeweils mindestens zwei im Abstand voneinander quer in den Freiraum (52) ragende Lagerzapfen (58) zur Aufnahme eines Tragrahmens (48) für die Antriebsbaugruppe (42) angeordnet sind, und dass die Lagerzapfen (58) je eine Grundplatte (66) tragen, mit der sie lösbar an der Montageschiene (62) befestigbar sind.

17. Betonpumpe nach Anspruch 16, **dadurch gekennzeichnet, dass** die Montageschienen (62) mehrere in Längsrichtung in definiertem Rasterabstand voneinander angeordnete, quer zum Freiraum (52) hin offene Schraubbohrungen (64) aufweisen, und dass die Grundplatten (66) mindestens zwei im Rasterabstand der Schraubbohrungen (64) voneinander angeordnete Durchtrittsöffnungen (68) für Befestigungsschrauben (70) aufweisen.

18. Betonpumpe nach Anspruch 17, **dadurch gekennzeichnet, dass** die Montageschienen (62) ein Rechteckprofil aufweisen, und dass die Grundplatten (66) auf ihrer dem Lagerzapfen (58) abgewandten Breitseite eine zu dem Rechteckprofil komplementäre randoffene Profilausnehmung (72) aufweisen, mit der sie formschlüssig auf die Möntageschienen (62) aufsetzbar und mit den Befestigungsschrauben (70) an diesen festlegbar sind.

19. Betonpumpe nach Anspruch 18, **dadurch gekennzeichnet, dass** der Lagerzapfen (58) bezüglich der Profilausnehmung (72) außermittig und in Längsrichtung vorzugsweise mittig an der Grundplatte (66) angeordnet ist.

20. Betonpumpe nach Anspruch 18 oder 19, **dadurch gekennzeichnet, dass** die Durchtrittsöffnungen (68) bezüglich der Profilausnehmung (72) mittig und in Längsrichtung im Abstand vom Lagerzapfen außermittig an der Grundplatte (66) angeordnet sind.

21. Betonpumpe nach einem der Ansprüche 10 bis 20, **dadurch gekennzeichnet, dass** der Lagerzapfen (58) an der Grundplatte (66) angeschweißt ist.

22. Betonpumpe nach Anspruch 21, **dadurch gekennzeichnet, dass** der Lagerzapfen (58) einen Flansch (74) und einen rückwärtigen Steckzapfen (76) aufweist und mit dem Steckzapfen (76) bis zum Anschlag des Flanschs (74) in eine Bohrung (78) der Grundplatte (66) eingesteckt und dort mit der Grundplatte verschweißt ist.

23. Betonpumpe nach einem der Ansprüche 16 bis 22, **dadurch gekennzeichnet, dass** die Montageschienen (62) an den Längsseitenholmen (50) angeschweißt sind.

24. Betonpumpe nach einem der Ansprüche 16 bis 23, **dadurch gekennzeichnet, dass** auf jeden Lagerzapfen (58) ein Lagerauge (84) aufsteckbar ist, das am Tragrahmen (48) lösbar befestigbar, vorzugsweise anschraubbar ist.

25. Betonpumpe nach Anspruch 24, **dadurch gekennzeichnet, dass** das Lagerauge (84) zum Lagerzapfen hin mit einem vorzugsweise elastisch verformbaren Kunststoffmaterial (92) ausgefüttert ist.

## Claims

1. Mobile concrete pump with a core pump and a building frame (22), which is placeable onto a running gear (12) of a lorry chassis (10) and is connectable to said running gear in the region of two longitudinal side struts (50) arranged at a lateral distance from each other leaving a clearance (52) free, for the accommodation of functional units forming a supporting device (38), the core pump (24), which is connected rigidly to a material feed container (32), and a distributor mast (36), and with a drive assembly (42) for activating the functional units, wherein the drive assembly (42) and the core pump (24) are arranged in the region of the clearance (52) between the longitudinal side struts (50), and the building frame (22) has a fixed bearing point (56), which is arranged at the rear end of said building frame, for the core pump (24), **characterized in that** the building frame (22) has a movable bearing point (54), which spans the clearance, for the core pump (24), and **in that** the core pump (24), which is preassembled in a modular manner, and the material feed container (32), which is connected rigidly to said core pump, are introduced into the clearance (52) from the rear end of the building frame (22) and are releasably connected to the movable bearing point (54) and to the fixed bearing point (56).

2. Concrete pump according to Claim 1, **characterized in that** the building frame (22) has slide rails, which lead to the bearing points, for the installation and removal of the core pump (24).

3. Concrete pump according to Claim 1 or 2, **characterized in that** the movable bearing point (54) is designed as a crossmember which spans the clearance (52) and on which the core pump (24) rests.

4. Concrete pump according to one of Claims 1 to 3, **characterized in that** the core pump (24) is resiliently supported against the longitudinal side struts (50) laterally, preferably by means of rubber-elastic buffers, in the region of the movable bearing point (54).

5. Concrete pump according to one of Claims 1 to 4, **characterized in that** the core pump (24) rests on the movable bearing point (54) and is secured against lifting off therefrom.

6. Concrete pump according to one of Claims 1 to 5, **characterized in that**, for the securing against lifting off, the core pump (24) has at least one catch mechanism which is connectable to the movable bearing point (54) and is preferably designed as a catch hook (56), a toggle lever (56'), a plug-in pin (56") or a plug-in wedge (56'").

7. Concrete pump according to one of Claims 1 to 6, **characterized in that** the core pump is designed as a hydraulically driven piston pump, and **in that** said core pump rests with the waterbox (28) thereof on the movable bearing point (54).

8. Concrete pump according to one of Claims 1 to 7, **characterized in that** the movable bearing point (54) is positionable on the longitudinal side struts (50) at different positions arranged at a distance from one another in the longitudinal direction.

9. Concrete pump according to one of Claims 3 to 8, **characterized in that** the crossmember forming the movable bearing point (54) is fastened rigidly to the longitudinal side struts (50), preferably screwed or welded thereon.

10. Concrete pump according to one of Claims 1 to 9, **characterized in that** the material feed container (32) has at least one extension arm (59) which is connectable releasably and rigidly to the fixed bearing point (56) of the building frame (22).

11. Concrete pump according to Claim 10, **characterized in that** the fixed bearing point (56) has a preferably rubber-elastic damping element.

12. Concrete pump according to one of Claims 1 to 11, **characterized in that** the building frame (22) has installation means (62) for the releasable receiving of differently sized supporting frames (48) which span the clearance (52) and can be equipped in a modular manner with different drive assemblies.

13. Concrete pump according to one of Claims 1 to 12, **characterized in that** the hydraulic and/or electric control and switching members for the drive assembly and for the functional units connected to the latter are combined to form a control module (94) which is arranged in the rear region of the building frame (22).

14. Concrete pump according to Claim 13, **characterized in that** the control module (94) comprises the hydraulic valves which are necessary for the control and are preferably combined in a hydraulic control unit (96), and/or a hydraulic accumulator (97).

15. Concrete pump according to Claim 13 or 14, **characterized in that** the hydraulic lines leading from the control module (94) to the drive assembly (42) are laid along the longitudinal side struts (50) of the building frame (22).

16. Concrete pump according to one of Claims 1 to 15, **characterized in that** a respective installation rail (62) which extends in the longitudinal direction of the longitudinal side struts (50) is arranged rigidly on the inner surface (60), which faces the clearance (52), of the longitudinal side struts (50), **in that** in each case at least two bearing journals (58), which project transversely at a distance from each other into the clearance (52) and are intended for receiving a supporting frame (48) for the drive assembly (42), are arranged on the longitudinal side struts (50), and **in that** the bearing journals (58) each bear a base plate (66) with which said bearing journals are fastenable releasably to the installation rail (62).

17. Concrete pump according to Claim 16, **characterized in that** the installation rails (62) have a plurality of screw bores (64) which are arranged at a defined grid spacing from one another in the longitudinal direction and are open transversely with respect to the clearance (52), and **in that** the base plates (66) have at least two passage openings (68), which are arranged at the grid spacing of the screw bores (64) from one another, for fastening screws (70).

18. Concrete pump according to Claim 17, **characterized in that** the installation rails (62) have a rectangular profile, and **in that** the base plates (66), on the wide side thereof facing away from the bearing journal (58), has a profiled recess (72) which is complementary, to the rectangular profile, is open at the edge and with which said base plates can be placed onto the installation rails (62) in a form-fitting manner and can be fixed on the latter with the fastening screws (70).

19. Concrete pump according to Claim 18, **characterized in that** the bearing journal (58) is arranged on the base plate (66) eccentrically with respect to the profiled recess (72) and preferably centrally in the longitudinal direction.

20. Concrete pump according to Claim 18 or 19, **characterized in that** the passage openings (68) are arranged on the base plate (66) centrally with respect to the profiled recess (72) and eccentrically at the spacing of the bearing journals in the longitudinal direction.

21. Concrete pump according to one of Claims 10 to 20, **characterized in that** the bearing journal (58) is welded on the base plate (66).

22. Concrete pump according to Claim 21, **characterized in that** the bearing journal (58) has a flange (74) and a rear plug-in journal (76) and is inserted with the plug-in journal (76) into a bore (78) in the base plate (66) as far as the stop of the flange (74) and is welded there to the base plate.

23. Concrete pump according to one of Claims 16 to 22, **characterized in that** the installation rails (62) are welded on the longitudinal side struts (50).

24. Concrete pump according to one of Claims 16 to 23, **characterized in that** a bearing eye (84) which is fastenable releasably to the supporting frame (48), preferably screwable thereon, is placeable onto each bearing journal (58).

25. Concrete pump according to Claim 24, **characterized in that** the bearing eye (84) is lined towards the bearing journal with a preferably elastically deformable plastics material (92).

## Revendications

1. Pompe à béton mobile avec une pompe noyau et un bâti de construction (22) pouvant être placé sur un châssis (12) d'un châssis mobile de poids lourd (10) et pouvant être relié à lui dans la zone de deux barres latérales longitudinales (50) disposées à une certaine distance latérale l'une de l'autre en laissant entre un espace libre (52) pour loger des unités fonctionnelles formant un dispositif d'appui (38), la pompe noyau (24) reliée de façon rigide à un conteneur de libération de matière (32) et un mât répartiteur (36) ainsi que pour loger un module d'entraînement (42) permettant de commander les unités fonctionnelles, le module d'entraînement (42) et la pompe noyau (24) étant disposés dans la zone de l'espace libre (52) située entre les barres latérales longitudinales (50) et le bâti de construction (22) comportant un point de palier fixe (56) disposé au niveau de son extrémité de côté arrière pour la pompe noyau (24), **caractérisée en ce que** le bâti de construction (22) comporte un point de palier mobile (54) chevauchant l'espace libre pour la pompe noyau (24) et que la pompe noyau (24) prémontée de façon modulaire et que le conteneur de libération de matière (32) relié à elle peuvent être introduits depuis l'extrémité de côté arrière du bâti de construction (22) jusque dans l'espace libre (52) et est relié au point de palier mobile (54) et au point de palier fixe (56).

2. Pompe à béton selon la revendication 1, **caractérisée en ce que** le bâti de construction (22) comporte des rails coulissants conduisant aux points de palier pour le montage et démontage de la pompe noyau (24).

3. Pompe à béton selon la revendication 1 ou 2, **caractérisée en ce que** le point de palier mobile (54) prend la forme de la poutre transversale chevauchant l'espace libre (52) sur laquelle repose la pompe noyau (24).

4. Pompe à béton selon l'une quelconque des revendications 1 à 3, **caractérisée en ce que** la pompe noyau (24) est soutenue de façon élastique en côté dans la zone du point de palier mobile (54), de préférence par un tampon élastique en caoutchouc, contre les barres latérales longitudinales (50).

5. Pompe à béton selon l'une quelconque des revendications 1 à 4, **caractérisée en ce que** la pompe noyau (24) repose sur le point de palier mobile (54) et est fixée de façon sécurisée contre tout soulèvement de celui-ci.

6. Pompe à béton selon l'une quelconque des revendications 1 à 5, **caractérisée en ce que** la pompe noyau (24) comporte, comme protection anti-soulèvement, au moins un mécanisme d'accrochage pouvant être relié au point de palier mobile (54), de préférence sous la forme d'un crochet d'accrochage (56), d'une genouillère (56'), d'un boulon enfichable (56") ou d'une clavette enfichable (56"').

7. Pompe à béton selon l'une quelconque des revendications 1 à 6, **caractérisée en ce que** la pompe noyau prend la forme d'une pompe de piston à entraînement hydraulique et qu'elle repose avec son caisson à eau (28) sur le point de palier mobile (54).

8. Pompe à béton selon l'une quelconque des revendications 1 à 7, **caractérisée en ce que** le point de palier mobile (54), peut être positionné en différents endroits placés à une certaine distance les uns des autres dans la direction longitudinale, au niveau des barres latérales longitudinales (50).

9. Pompe à béton selon l'une quelconque des revendications 3 à 8, **caractérisée en ce que** la poutre transversale formant le point de palier mobile (54) est fixée de façon rigide, de préférence vissée ou soudée, aux barres latérales longitudinales (50).

10. Pompe à béton selon l'une quelconque des revendications 1 à 9, **caractérisée en ce que** le conteneur de libération de matière (32) comporte au moins un cantilever (59) pouvant être relié de façon amovible et de façon rigide au point de palier fixe (56) du bâti de construction (22).

11. Pompe à béton selon la revendication 10, **caractérisée en ce que** le point de palier fixe (56) comporte un élément d'amortissement de préférence en caoutchouc élastique.

12. Pompe à béton selon l'une quelconque des revendications 1 à 11, **caractérisée en ce que** le bâti de construction (22) comporte des moyens de montage (62) permettant de recevoir de façon amovible un bâti porteur (48) de différentes tailles chevauchant l'espace libre (52) et équipé de façon modulaire de différents modules d'entraînement.

13. Pompe à béton selon l'une quelconque des revendications 1 à 12, **caractérisée en ce que** les organes de commande et de connexion hydrauliques et/ou électriques prévus pour le module d'entraînement et pour le module de commande (94) disposé au niveau des unités fonctionnelles raccordées sont regroupés dans une zone arrière du bâti de construction (22).

14. Pompe à béton selon la revendication 13, **caractérisée en ce que** le module de commande (94) nécessaire pour la commande comprend des soupapes hydrauliques et/ou un accumulateur hydraulique (97) de préférence regroupés dans un bloc de commande (96) hydraulique.

15. Pompe à béton selon la revendication 13 ou 14, **caractérisée en ce que** les conduites hydrauliques allant du module de commande (94) au module d'entraînement (42) sont posées au niveau des barres latérales longitudinales (50) du bâti de construction (22).

16. Pompe à béton selon l'une quelconque des revendications 1 à 15, **caractérisée en ce que** respectivement un rail de montage (62) s'étendant dans la direction longitudinale des barres latérales longitudinales (50) est disposé de façon rigide au niveau de la surface intérieure (60), orientée vers l'espace libre (52), desdites barres, que respectivement au moins deux tourillons de palier (58) saillant transversalement dans l'espace libre (52) à une certaine distance l'un de l'autre sont disposés au niveau des barres latérales longitudinales (50) pour recevoir un bâti porteur (48) prévu pour le module d'entraînement (42) et que les tourillons de palier (58) supportent respectivement une plaque de base (66) à laquelle ils peuvent être fixés de façon amovible au rail de montage (62).

17. Pompe à béton selon la revendication 16, **caractérisée en ce que** les rails de montage (62) comportent plusieurs alésages vissés (64) ouverts transversalement en direction de l'espace libre (52) et disposés dans la direction longitudinale à une certaine distance de quadrillage définie les uns des autres et que les plaques de base (66) comportent au moins deux ouvertures traversantes (68) prévues pour les vis de fixation (70) et disposées l'une par rapport à l'autre à une distance de quadrillage des alésages vissés (64).

18. Pompe à béton selon la revendication 17, **caractérisée en ce que** les rails de montage (62) comportent un profil rectangulaire et que les plaques de base (66) comportent sur leur côté de largeur opposé au tourillon de palier (58) un évidement de profilé (72) ouvert en bordure complémentaire par rapport au profilé rectangulaire, les deux pouvant être placés sur les rails de montage (62) et fixés à lui par complémentarité de formes avec les vis de fixation (70).

19. Pompe à béton selon la revendication 18, **caractérisée en ce que** le tourillon de palier (58) est disposé de façon excentrée par rapport à l'évidement de profilé (72) et est disposé de préférence de façon centrale au niveau de la plaque de base (66) dans la direction longitudinale.

20. Pompe à béton selon la revendication 18 ou 19, **caractérisée en ce que** les ouvertures traversantes (68) sont disposées de façon centrale par rapport à l'évidement de profilé (72) et de façon excentrée au niveau de la plaque de base (66) dans la direction longitudinale, à une certaine distance du tourillon de palier.

21. Pompe à béton selon l'une quelconque des revendications 10 à 20, **caractérisée en ce que** le tourillon de palier (58) est soudé à la plaque de base (66).

22. Pompe à béton selon la revendication 21, **caractérisée en ce que** le tourillon de palier (58) comporte une bride (74) et un tenon enfichable (76) arrière et qu'est enfichée dans un alésage (78) de la plaque de base (66) avec le tenon enfichable (76) jusqu'à la butée de la bride (74) et soudée à cet endroit avec la plaque de base.

23. Pompe à béton selon l'une quelconque des revendications 16 à 22, **caractérisée en ce que** les rails de montage (62) sont soudés aux barres latérales longitudinales (50).

24. Pompe à béton selon l'une quelconque des revendications 16 à 23, **caractérisée en ce qu'**un oeilleton de palier (84) peut être enfiché sur chaque tourillon de palier (58), ledit oeilleton pouvant être fixé de façon amovible au bâti porteur (48), de préférence vissé.

25. Pompe à béton selon la revendication 24, **caractérisée en ce que** l'oeilleton de palier (84) est rempli en direction du tourillon de palier avec une matière plastique (92) de préférence élastiquement déformable.
